Europäisches Patentamt

European Patent Office

Office européen des brevets

(11) Publication number: **0 331 383 A2**

# (12) EUROPEAN PATENT APPLICATION

(21) Application number: **89301898.6**

(22) Date of filing: **27.02.89**

(51) Int. Cl.4: **H01H 9/02**

(30) Priority: **27.02.88 GB 8804642**

(43) Date of publication of application:
**06.09.89 Bulletin 89/36**

(84) Designated Contracting States:
**AT BE CH DE ES FR GB IT LI**

(71) Applicant: **DELTA CIRCUIT PROTECTION & CONTROLS LTD.**
**Reddings Lane Tyseley**
**Birmingham B11 3EZ(GB)**

(72) Inventor: **Varga, Tibor Gyorgy**
**27 Lon Gardener**
**Valley Gwynedd. LL65 3DN(GB)**

(74) Representative: **Carpenter, David et al**
**MARKS & CLERK Alpha Tower Suffolk Street**
**Queensway**
**Birmingham B1 1TT(GB)**

(54) **Electrical supply control apparatus.**

㉗ Electrical supply control apparatus including an electrically insulating housing (12), at least one terminal assembly (21) having a part (19) thereof accessible at the exterior of the housing (12), and, an electrically insulating cover (26). The housing and the cover include first coacting formations (22, 24, 28) whereby the cover (26) is hinged to the housing (12) and is movable relative thereto between an open position in which access to said terminal part (19) is afforded, and a closed position in which said terminal part (19) is covered. The housing (12) and the cover 26) are further provided with coacting surfaces (23, 25, 27) whereby, in said closed position, the cover (26) and the housing (12) are interengaged as a snap-fit to retain the cover in said closed position.

FIG 1

## ELECTRICAL SUPPLY CONTROL APPARATUS

This invention relates to electrical supply control apparatus, which term is intended herein to denote the type of control apparatus which would usually be found in, for example, an electrical supply consumer unit and which includes Isolators and Residual Current Devices (RCD's).

Control apparatus such, for example, as isolators and RCD's often incorporate terminal clamps the clamping screws of which are exposed at the forwardly presented face of the apparatus in use, and so are susceptible to unintentional contact giving rise, for example, to risk of personal injury or short circuiting. The invention is primarily, but not exclusively, intended for use with apparatus having one or more terminals remaining live when the cover of the respective consumer unit is opened, hence the reference above to isolators and RCD's which would have a live terminal notwithstanding the isolator being switched to "OFF" as necessary to open the consumer unit cover. It will be understood however that if desired the invention can be applied to other items including, for example, Minature Circuit Breakers (MCB's) and High Rupture Capacity (HRC) fuse units.

It is an object of the present invention to minimise the risk of accidential contact with an exposed part of a terminal.

According to the invention there is provided an item of electrical supply control apparatus including an electrically insulating housing, at least one terminal assembly having a part thereof accessible at the exterior of the housing; and, an electrically insulating cover, the housing and the cover having first coacting formations whereby the cover is hinged to the housing and is movable relative thereto between an open position in which access to said terminal part is afforded, and a closed position in which said terminal part is covered, the housing and the cover having coacting surfaces whereby, in said closed position, the cover and the housing are interengaged as a snap-fit to retain the cover in said closed position.

Preferably said cover, in its closed position is received in a recess in the wall of the housing.

Desirably said coacting surfaces comprise a hook-like formation at one end of the cover and a projecting formation on the housing about which said hook-like formation can engage by flexure of the cover.

Desirably said first coacting formations comprise a hook-like formation at one end of the cover and a correspondingly shaped formation on the housing around which the hook-like formation of the cover can move during hinging of the cover relative to the housing.

Preferably both ends of the cover are identical.

Desirably the cover is a length of material cut from an elongate extrusion.

Desirably the formations on the housing which coact with the cover both comprise first and second spaced, axially aligned, oppositely extending cylindrical posts.

Preferably when the cover is in its closed position one end thereof is readily accessible to permit manual engagement and disengagement of said coacting surfaces, and access to the opposite end of the cover is obstructed by the housing.

One example of the invention is illustrated in the accompanying drawings wherein:-

Figure 1 is a perspective view of part of an isolator with a terminal cover thereof open,

Figure 2 is a view similar to Figure 1 showing the cover closed,

Figure 3 is a view to an enlarged scale, partly in section, of the isolator of Figure 1, and

Figure 4 is a perspective view of the cover seen in Figures 1, 2 and 3.

Referring to the drawings, the isolator 11 is basically a high current capacity, manually operable, electrical switch for use in a consumer unit. It will be understood that in a domestic wiring system, for example in a dwelling house, the consumer unit distributes the incoming power supply to the various wiring circuits of the house. The incoming supply is fed through the isolator to other control apparatus in the consumer unit whereby control over individual wiring circuits of the house is effected. For example, the isolator may control the supply to a plurality of individual minature circuit breakers or to high rupture capacity fuse units or a combination of both. The consumer unit may also include one or more residual current devices, and there may be additional isolators ganged together. For example, a double pole isolator may be applied to both the live and neutral incoming lines of the supply, and where the consumer unit receives a three phase supply, as may be the case in larger premises for example shops and offices, then there may be a four pole isolator to disconnect the phase and neutral lines.

All of the devices within the consumer unit will have clamp-type terminals the clamping screws of which are accessible at the front face of the device. With the cover of the unit removed it will be recognised that at least the input terminal(s) of any isolator will be live. It is for this reason that the invention is described as applied to the input terminal of an isolator, but it should be understood that the invention can similarly be applied to the terminals of any of the devices, and may find use with similar devices not necessarily forming part of a consumer unit.

The isolator 11 includes a moulded synthetic resin housing 12 pivotally supporting an operating lever 13 for manually moving the electrical contacts of the isolator between an open position and a closed position. The lever 13 protrudes from the front face of a centrally disposed upstanding region 14 of the housing 12, the front face of the housing 12 having plateau regions 15 and 16 on opposite sides respectively of the region 14. The plateau regions 15, 16 are identical but only the plateau region 15 will be described in detail since it is the plateau region 15 which is associated with the input terminal of the isolator. Thus the plateau region 15 is formed with a recess 17 the base of which is formed with a bore 18 receiving the clamping screw 19 of the input terminal assembly 21 of the isolator. It will be recognised that in the absence of any further components the head of the screw 19 would be accessible at the front face of the isolator when in use.

The recess 17 is bounded by the base which contains the bore 18, opposite side walls 17a, 17b upstanding from the base, and an end wall 17c also upstanding from the base and interconnecting the side walls 17a, 17b at the end of the recess 17 adjacent the region 14 of the housing. It will be noted that the recess 17 is open at its end remote from the region 14 of the housing, there being no end wall opposite the wall 17c.

At its end adjacent the wall 17c the wall 17a of the recess is formed integrally with a short cylindrical post 22, the post 22 extending towards the wall 17b. A similar post 23 is formed integrally with the wall 17a adjacent its end remote from the wall 17c and the wall 17b is formed with similar integral posts 24, 25, the posts 22, 24, being axially aligned and extending towards one another, and the posts 23, 25 similarly being axially aligned and extending towards one another.

Engageable with the posts 22 - 25 is an electrically insulating, moulded synthetic resin cover 26. The cover 26 is generally rectangular in plan view, its length and breadth being matched to that of the recess 17 such that the cover can be a close fit within the recess. The cover 26 is generally in the form of planar strip the opposite ends of which are bent back on themselves to define hook-like formations 27, 28. Although the cover 26 could be formed from a strip of material the ends of which are bent to produce the formations 27, 28, it is more convenient to produce covers 26 by extruding an elongate member having the formations 27, 28 along its marginal edges, and then cutting appropriate lengths from the elongate strip to provide individual covers 26. The material from which the cover 26 is formed is resilient.

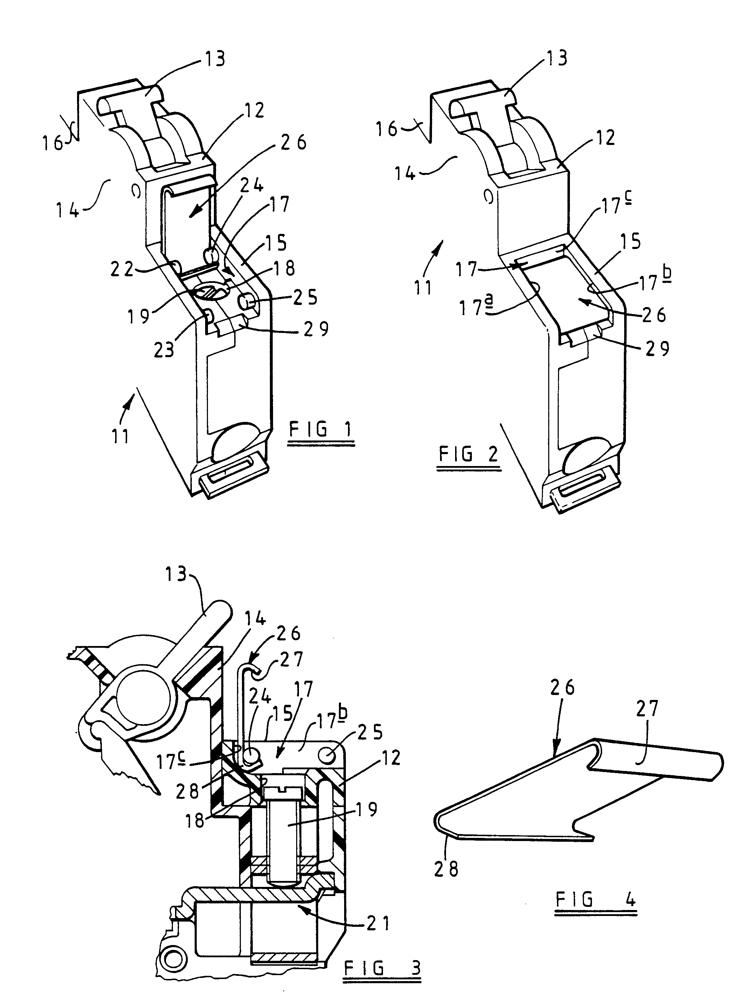

The cover 26 is attached to the housing 12 by introducing the formation 27 around the posts 23, 25 and then pivoting the cover 26 about the posts 23, 25 to bring the formation 28 into engagement with the posts 22, 24. Thereafter the application of pressure to the end of the cover 26 carrying the formation 28 will cause the formation 28 to snap engage around the posts 22, 24 so that the cover 26 is retained in position closing the recess 17 by the engaegment of the formation 28, 27 with the posts 22, 24 and 23, 25 respectively. When it is desired to open the cover 26, to expose the screw 19, it will be recognised that only the formation 27 of the cover 26 is readily accessible, access to the formation 28, which was snapped into engagement around the posts 22, 24, being restricted by the upstanding end wall 17c of the recess 17. However, the absence of a wall opposite the wall 17c provides access to the formation 27 of the cover 26 whereby upward pressure on the formation 27, for example by introducing a screwdriver or like tool between the base of the recess and the formation 27, permits the formation 27 to be snapped out of engagement with the posts 23, 25 so that the cover 26 can pivot about the posts 22, 24 to an open position. As can be seen clearly in Figures 1 and 2 the base of the recess 17 is provided with a chamfered region 29 to permit introduction of a tool between the base of the recess and the formation 27 of the cover. In order to close the cover it is pivotted about the posts 22, 24 until the formation 27 engages the posts 23, 25 whereupon continued pressure will cause the formation 27 to snap engage around the posts 23, 25 thus retaining the cover 26 in its closed position. It will be understood therefore that apart from initial assembly of the cover 26 to the housing 12 the formation 28 does not snap into or out of engagement with the posts 22, 24.

The initial snap engagement of the formation 28 with posts 22, 24 and subsequent pivotal movement of the formation 28 about the posts is preferred by virtue of its extreme simplicity. It is to be understood however that if desired in place of the formation 28 and posts 22, 24 the cover 26 could be provided with a pair of outwardly extending tags which are pivotally received within recesses provided in the walls 17a, 17b in place of the posts 22, 24. Snap engagement of the tags into the recesses might still be possible, although instead it might be preferred to engage the tags in the recesses when the housing 12 is assembled. Conveniently the housing is an assembly of two mouldings and the cover 26 could be placed in position such that the tags thereof engage in the recesses of the walls 17a, 17b during assembly of the two moulding to define the housing. The hook formation 27 and posts 23, 25 would still be provided to afford the snap fit between the cover and the housing during opening and closing movement. Naturally other snap fit formations on the cover and housing could be provided in place of the hook-like formation 27 and posts 23, 25 if desired, although as mentioned above the hook and post arrangement is preferred by virtue of its simplicity.

The colour of the material of cover 26 can be chosen to provide an indication of whether the terminal is a live, or a neutral terminal. For example red may be chosen for a live terminal and black for a neutral terminal. Moreover, where isolators are provided for each phase of the incoming supply then appropriate colours may be chosen to identify each phase. As an alternative to identification by means of colour each cover 26 may have an identifying symbol or legend printed thereon. Both terminals of each isolator or other device can have covers 26. Thus a second cover 26 could be similarly associated with the plateau 16 in the isolator illustrated.

## Claims

1. Electrical supply control apparatus including an electrically insulating housing (12) and at least one terminal assembly (21) having a part (19) thereof accessible at the exterior of the housing, the apparatus being characterized by an electrical insulating cover, the housing (12) and the cover (26) having first coacting formations (22, 24, 28) whereby the cover (26) is hinged to the housing (12) and is movable relative thereto between an open position in which access to said terminal part (19) is afforded, and a closed position in which said terminal part (19) is covered, the housing (12) and the cover (26) having coacting surfaces (23, 25, 27) whereby, in said closed position, the cover (26) and the housing (12) are interengaged as a snap-fit to retain the cover (26) in said closed position.

2. Apparatus as claimed in claim 1 characterized in that said cover (26), in its closed position is received in a recess (17) in the wall of the housing.

3. Apparatus as claimed in claim 1 or claim 2 characterized in that said coacting surfaces comprise a hook-like formation (27) at one end of the cover (26) and a projecting formation (23, 25) on the housing (12) about which said hook-like formation (27) can engage by flexure of the cover.

4. Apparatus as claimed in any one of claims 1 to 3 characterized in that said first coacting formations (22, 24, 28) comprise a hook-like formation (28) at one end of the cover (26) and a correspondingly shaped formation (22, 24) on the housing (12) around which the hook-like formation (28) of the cover (26) can move during hinging of the cover (26) relative to the housing (12).

5. Apparatus as claimed in any one of claims 1 to 4 characterized in that both ends of the cover (26) are identical.

6. Apparatus as claimed in any one of claims 1 to 5 characterized in that the cover (26) is a length of material cut from an elongate extrusion.

7. Apparatus as claimed in any one of claims 1 to 6 characterized in that the formations on the housing (12) which coact with the cover (26) both comprise first and second spaced, axially aligned, oppositely extending cylindrical posts (22, 24; 23, 25).

8. Apparatus as claimed in any one of claims 1 to 7 characterized in that the cover, when in its closed position has one end (27) thereof is readily accessible to permit manual engagement and disengagement of said coacting surface (27, 23, 25), and access to the opposite end (28) of the cover is obstructed by the housing (12).

FIG 1

FIG 2

FIG 3

FIG 4